# EUROPÄISCHE PATENTSCHRIFT

(11) **EP 0 557 557 B1**
(45) Veröffentlichungstag und Bekanntmachung des Hinweises auf die Patenterteilung: **15.02.1995**
(21) Anmeldenummer: 92103341.1
(22) Anmeldetag: 27.02.1992
(51) Int. Cl.: A01K 5/02, A01K 7/00

(54) **Vorrichtung zum Zuführen von Trinkflüssigkeit bei Selbstfütterungsvorrichtungen für Haustiere o. dgl.**
Device for the supply of drinking liquid in selffeeders for domestic animals
Dispositif pour l'alimentation de liquide potable pour mangeoire pour nourrir les animaux domestiques

(43) Veröffentlichungstag der Anmeldung: 01.09.1993
(73) Patentinhaber: ARATOWERK WALTER VON TASCHITZKI GmbH & CO. KG, D-51107 Köln (DE)
(72) Erfinder: Von Taschitzki, Rainer, W-5000 Köln-Rath/Heumar (DE)
(74) Vertreter: Stachow, Ernst-Walther, Prof. Dr.

(56) Entgegenhaltungen:
- BE-A- 1 001 801
- DE-U- 9 202 530
- FR-A- 2 592 761
- GB-A- 2 001 407
- NL-A- 8 802 062

## Beschreibung

Die Erfindung bezieht sich auf eine Vorrichtung zum Zuführen von Trinkflüssigkeit bei Selbstfütterungsvorrichtungen für Haustiere u. dgl., die einen Futtertrog und einen Futtervorratsbehälter aufweisen, sowie eine von dem Tier zu betätigende Rüttelvorrichtung, deren unteres Ende in den Futtertrog ragt und die zugleich als Trinkflüssigkeits-Zuführungsorgan ausgebildet ist.

Es sind Selbstfütterungsvorrichtungen bekannt, die mit Flüssigkeitsspendern derart ausgerüstet sind, daß die Zuführung der Trinkflüssigkeit weitestgehend an der Außenwand der Vorrichtung herabgeführt wird. Dies hat den Nachteil, daß der Materialeinsatz für die Bereitstellung der Trinkflüssigkeit hoch ist, da die Zuführungsleitung zumindest teilweise um die Vorrichtung herum geführt werden muß.

Bei einer anderen bekannten Selbstfütterungsvorrichtung, die die GB-A-2212045 offenbart, wird dieser Nachteil dadurch vermieden, daß die Rüttelvorrichtung zur Bereitstellung des Futters gleichzeitig als Trinkflüssigkeits-Zuführungsorgan ausgebildet ist. Diese Selbstfütterungsvorrichtung besteht im wesentlichen aus einem Futtertrog und einem darüber angeordneten Futtervorratsbehälter, sowie der Rüttelvorrichtung, die durch den Futtervorratsbehälter hindurch in den Innenraum des Futtertroges ragt und aus einem biegbaren Rohr besteht. Das obere Ende des Rohres ist dabei so ausgebildet, daß es an eine flexible Wasserleitung angeschlossen werden kann, während das in den Futtertrog ragende Ende des Rohres mit einer Trinkdüse ausgestattet ist. Versucht nun beispielsweise ein Tier, der Trinkdüse Trinkflüssigkeit zu entnehmen, biegt es dabei das Rohr hin und her und bewirkt dadurch gleichzeitig die Freigabe von Futter.

Das innen durch den Futtervorrat geführte Leitungsrohr gewährleistet so den sparsamsten, direkten Leitungsweg der Trinkflüssigkeit. Aber dadurch, daß das Leitungsrohr ständig von dem durchströmenden Wasser abgekühlt wird, bildet sich Schwitzwasser, welches mit dem Futter verklebt. Dieser Mehlkleister bildet einen Nährboden für Keime, die durch Schimmelbildung und Gärung das Futter verderben.

Aufgabe der Erfindung ist es, bei einer solchen Selbstfütterungsvorrichtung eine Flüssigkeitszuführung zu schaffen, die den besonders materialsparenden direkten Leitungsweg zum Flüssigkeitsspender nimmt, dabei aber eine die Futterbeschaffenheit beeinträchtigende Schwitzwasserbildung vermeidet.

Die Erfindung zeichnet sich dadurch aus, daß die Rüttelvorrichtung, die zugleich als Trinkflüssigkeitszuführungsorgan ausgebildet ist, eine Spindel aufweist, die aus einem Rohr besteht, welches zugleich als Flüssigkeitszulauf für den an seinem unteren, in den Futtertrog ragenden Ende angeordneten Flüssigkeitsspender dient, und daß sich innerhalb der hohlen Spindel ein Zuleitungsrohr von geringerem Querschnitt befindet, welches die zugeführte Flüssigkeit bis kurz vor den Einlauf des Flüssigkeitsspenders führt.

Diese Anordnung hat den Vorteil, daß die von dem inneren Zuleitungsrohr geführte frische Trinkflüssigkeit nicht unmittelbar mit der vorzugsweise metallenen Spindel in Kontakt treten kann, sondern daß sich zwischen dieser und dem inneren Zuleitungsrohr teils Luft, teils Wasser befindet, welches sich durch die längere Verweildauer bereits temperiert hat.

Um ein Entweichen der als Isolierstoff willkommenen Luft zu verhindern, wird zweckmäßig das innere Zuleitungsrohr in den Anschlußnippel am Kopf der Spindel dichtschließend eingesetzt. Außerdem läßt sich die Wirkung dieser Anordnung noch dadurch verbessern, daß das innere Zuleitungsrohr aus wärmedämmendem Material, vorzugsweise aus Kunststoff besteht.

Eine noch bessere Wärmedämmung ergibt sich dadurch, daß der Hohlraum zwischen der Innenwand der hohlen Spindel und der Außenwand des inneren Zuleitungsrohres mit einem wärmedämmenden Stoff, wie z.B. Polyurethanschaum, ausgefüllt wird. Ferner ergibt sich eine besonders preiswert herzustellende Ausführung, wenn man auf das Einsetzen eines inneren Zuleitungsrohres verzichtet und lediglich den Innenraum der hohlen Spindel in der Weise mit einem wärmedämmenden Stoff füllt, daß dieser in seinem Inneren einen axialen Kanal aufweist, welcher als Zuleitung zu dem Flüssigkeitsspender im Fuß der Spindel dient.

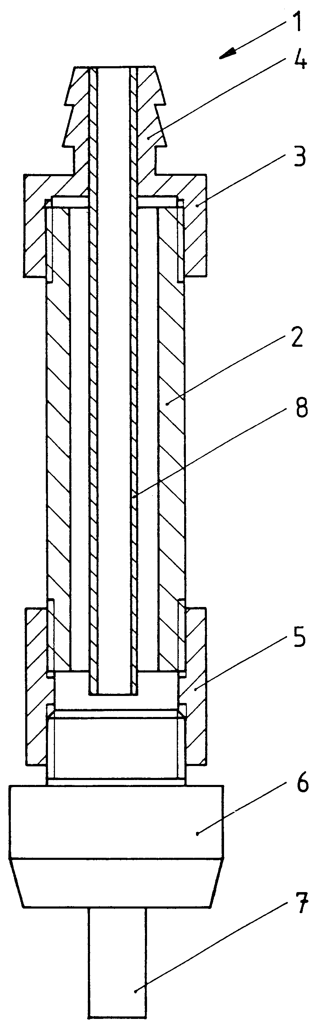

Die Erfindung wird anhand eines in der Zeichnung dargestellten Ausführungsbeispiels nachstehend erläutert:

Die einzige Figur stellt eine Zuführungsvorrichtung von Trinkflüssigkeit gemäß der Erfindung im Längsschnitt dar.

Die Rüttelvorrichtung 1 einer Selbstfütterungsvorrichtung ist als Hohlkörper ausgebildet und besteht aus einem Hohlrohr (Spindel) 2, das am oberen Ende mit einem Anschlußnippel 3 ausgestattet ist. Der Anschlußnippel 3 ist leitungsseitig mit einem Anschlußstutzen 4 versehen, der zur Aufnahme einer flexiblen Wasserleitung, z.B. eines Schlauches, gestaltet ist. Am unteren Ende der Spindel 2 befindet sich ein Spindelfuß 5 als Verbindungsteil zu dem Flüssigkeitsspender 6 mit einem vom Tier zu betätigenden Stößel 7.

Im Anschlußnippel 3 ist das obere Ende eines inneren Zuleitungsrohres 8 dichtschließend eingesetzt, welches sich durch die Mitte der als Rohr ausgebildeten Spindel 2 bis unmittelbar vor den im Spindelfuß 5 eingesetzten Flüssigkeitsspender 6 erstreckt. Das innere Zuleitungsrohr 8, d.h. das Rohr kleineren Durchmessers, besteht vorteilhaft aus Dämmaterial, vorzugsweise Kunststoff. Durch das innere Zuleitungsrohr 8 wird die meist kühle Trinkflüssigkeit bis vor den Einlauf in den Flüssigkeitsspender 6 geführt. Zwischen dem inneren Zuleitungsrohr 8 und der Wand der hohlen Spindel 2 befindet sich teils Luft, teils Wasser, welches durch die längere Verweildauer erwärmt ist und eine gewisse Isolierung bildet, so daß das frisch zulaufende Wasser die Spindel selbst nicht abkühlen kann und eine Schwitzwasserbildung an ihrer Außenseite vermieden wird.

Eine Isolierung kann auch dadurch hergestellt werden, daß der Hohlraum zwischen der Spindel 2 und dem inneren Zuleitungsrohr 8 mit einem wärmedämmenden Stoff, z.B. Polyurethanschaum ausgefüllt wird. Dieser kann im Inneren einen axialen Kanal aufweisen, der als Zuleitung zu dem Flüssigkeitsspender 6 im Fuß der Spindel dient.

Die Rüttelvorrichtung kann auch aus einem pendelnd aufgehängten Rüttelstab oder dergleichen bestehen.

### Bezugszeichenliste

- 1: Rüttelvorrichtung
- 2: Spindel
- 3: Anschlußnippel
- 4: Anschlußstutzen
- 5: Anschlußspindelfuß
- 6: Flüssigkeitsspender
- 7: Stößel

## Patentansprüche

1. Vorrichtung zum Zuführen von Trinkflüssigkeit bei Selbstfütterungsvorrichtungen für Haustiere u. dgl., die einen Futtertrog und einen Futtervorratsbehälter aufweisen, sowie eine von dem Tier zu betätigende Rüttelvorrichtung, deren unteres Ende in den Futtertrog ragt und die zugleich als Trinkflüssigkeits-Zuführungsorgan ausgebildet ist, **dadurch gekennzeichnet,** daß die Rüttelvorrichtung (1) eine Spindel (2) aufweist, die aus einem Rohr besteht, welches zugleich als Flüssigkeitszulauf für den an seinem unteren, in den Futtertrog ragenden Ende angeordneten Flüssigkeitsspender (6) dient, und daß sich innerhalb der hohlen Spindel (2) ein Zuleitungsrohr (8) von geringerem Querschnitt befindet, welches die zugeführte Flüssigkeit bis kurz vor den Einlauf des Flüssigkeitsspenders (6) führt.

## Claims

1. A device for supplying drinking fluid in self-feeding devices for pets or similar, including a feed trough and a feed storage container, as well as a shaking device operable by the animal, with a lower end projecting into the feed trough and being designed at the same time as a supply unit for drinking fluid, characterized in that the shaking device (1) includes a spindle (2) consisting of a pipe, serving at the same time as a fluid supply for the fluid dispenser (6) being positioned at its lower end and projecting into the feeding trough and that inside the hollow spindle (2) a feed pipe (8) of small diameter is arranged, feeding the supplied fluid to a point close to the inlet of the fluid dispenser (6).

## Revendications

1. Dispositif pour acheminer un liquide prévu comme boisson dans le cas de dispositifs d'alimentation automatiques pour animaux domestiques et analogues, qui comprennent une auge de mangeoire et un récipient de réserve d'aliments, ainsi qu'un dispositif agitateur, destiné à être actionné par l'animal, dont l'extrémité inférieure s'engage dans l'auge de mangeoire et qui forme en même temps un organe d'amenée de liquide - boisson, caractérisé en ce que le dispositif agitateur (1), qui forme en même temps l'organe d'amenée du liquide de boisson, présente une tige (2) qui est constituée par un tube qui sert en même temps d'amenée du liquide pour le distributeur de liquide (6) disposé à son extrémité inférieure engagée dans l'auge de mangeoire, et en ce qu'à l'intérieur de la tige creuse (2), se trouve un tube d'amenée (8) de plus petite section qui conduit le liquide amené jusqu'à juste en amont de l'entrée du distributeur de liquide (6).
